# FASCICULE DE BREVET EUROPEEN

(11) **EP 4 425 211 B1**
(45) Date de publication et mention de la délivrance du brevet: **17.12.2025**
(21) Numéro de dépôt: 24157519.0
(22) Date de dépôt: 14.02.2024
(51) Int. Cl.: G01S 13/72, G01S 13/87, G01S 7/41, G01S 13/95, G01S 13/58

(54) **SYSTÈME DE CLASSIFICATION DE PISTES RADAR EN FAUSSES PISTES ANGES, CORRESPONDANT À DES ANGES RADAR, ET EN AUTRES PISTES CORRESPONDANT À DES CIBLES D'INTÉRÊT COMMES DES AÉRONEFS OU DES MISSILES**
SYSTEM ZUR KLASSIFIZIERUNG VON RADARSPUREN IN FALSCHE JUCKENSPUREN UND ANDEREN SPUREN, DIE SICH AUF INTERESSIERENDE ZIELE WIE FLUGZEUGE ODER FLUGKÖRPER SIND
SYSTEM FOR CLASSIFYING RADAR TRACKS IN ANIMATED RUNWAYS, CORRESPONDING TO RADAR TRAPS, AND OTHER TRACKS CORRESPONDING TO TARGETS OF INTEREST SUCH AS AIRCRAFT OR MISSILES

(30) Priorité: 02.03.2023 FR 2301942
(43) Date de publication de la demande: 04.09.2024
(73) Titulaire: THALES, 92190 Meudon (FR)
(72) Inventeur: MAZIERE, Frédéric, 91300 MASSY (FR); PISTORIUS, Guillaume, 91300 MASSY (FR)
(74) Mandataire: Atout PI Laplace

(56) Documents cités:
- EP-A1- 3 167 305
- CN-A- 115 409 064
- LIU MEIQIN ET AL: "Identification and suppression of clutter using machine learning method", 2019 IEEE INTERNATIONAL CONFERENCE ON SIGNAL, INFORMATION AND DATA PROCESSING (ICSIDP), IEEE, 11 December 2019 (2019-12-11), pages 1 - 4, XP033813402, DOI: 10.1109/ICSIDP47821.2019.9173283
- WASHINGTON RICHARD L ET AL: "Analysis of machine learning methods for clutter classification", PROCEEDINGS OF THE SPIE, SPIE, US, vol. 11742, 12 April 2021 (2021-04-12), pages 1174213 - 1174213, XP060141512, ISSN: 0277-786X, ISBN: 978-1-5106-5738-0, DOI: 10.1117/12.2588310

## Description

La présente invention porte sur un système de classification de pistes radar, en fausses pistes anges, correspondant à des anges radar, et en autres pistes, correspondant à des cibles d'intérêt comme des aéronefs ou des missiles.

L'invention concerne les anges radar, qui sont des échos radar qui ne peuvent être attribués à des réflexions sur des cibles d'intérêt, tels des aéronefs dans le domaine de la surveillance aérienne, mais peuvent être attribués à des phénomènes atmosphériques comme la variation de l'indice de réfraction de l'air ou la présence de particules en suspension dans l'air. Lorsque les conditions atmosphériques sont réunies, les anges radars constituent des ensembles suffisamment cohérents pour que les radars initialisent et confirment des pistes. Par extension, ces fausses pistes, c'est-à-dire des pistes qui ne sont pas sur des cibles d'intérêt, sont appelées fausses pistes anges. Ces fausses pistes anges s'ajoutent aux pistes, sont propagées dans l'ensemble de la chaîne de surveillance et perturbent la mission de surveillance aérienne.

Un but de l'invention est d'éviter que ces fausses pistes anges puissent apparaître dans la situation présentée à l'opérateur ou soient identifiées comme telles.

Les solutions existantes sont souvent basées sur des critères de vitesse minimum pour la confirmation de piste car les fausses pistes anges ont souvent des vitesses bien plus faibles que celles des avions. L'augmentation du seuil de vitesse minimum présente l'inconvénient de supprimer également les pistes sur des drones à évolution lente, un type de cibles particulièrement intéressant. L'augmentation du seuil de vitesse minimum est parfois limitée à une zone restreinte en distance autour du radar et dans une tranche d'altitudes. Toutefois, la zone dans laquelle les fausses pistes anges sont observées s'étend sur de grandes distances et sur des tranches d'altitudes très larges. En pratique, c'est inapplicable car la zone dans laquelle la détection des drones est affectée est trop grande. Un seuil de vitesse radial minimum est parfois défini par secteur angulaire. En pratique, c'est inefficace et très difficilement réglable car les fausses pistes anges ont rarement une trajectoire radiale par rapport au radar. Enfin, ces palliatifs sont réglés manuellement, mais la présence et les caractéristiques des pistes anges dépendant des conditions atmosphériques, elles requièrent des ajustements fréquents.

Lorsque les conditions atmosphériques sont réunies, en particulier lorsque les phénomènes anges proviennent de particules charriées par le vent, les anges radars constituent des ensembles suffisamment cohérents pour que les radars initialisent et confirment des pistes. Ces pistes présentent généralement des caractéristiques communes. Tout d'abord, elles se déplacent à des vitesses relativement faibles (moins de 50 m.s-1) et sont similaires en termes de cap et de vitesse. Elles sont distribuées sur un disque centré sur le radar et lorsqu'on les observe sur une longue durée, leurs trajectoires rectilignes semblent avoir été tracées par le passage dans le sable un peigne édenté.

Le document EP3167305B1 divulgue un système de classification de pistes radar, en fausses pistes correspondant à des phénomènes de propagation atmosphériques anormaux et en pistes d'intérêts correspondant à des aéronefs.

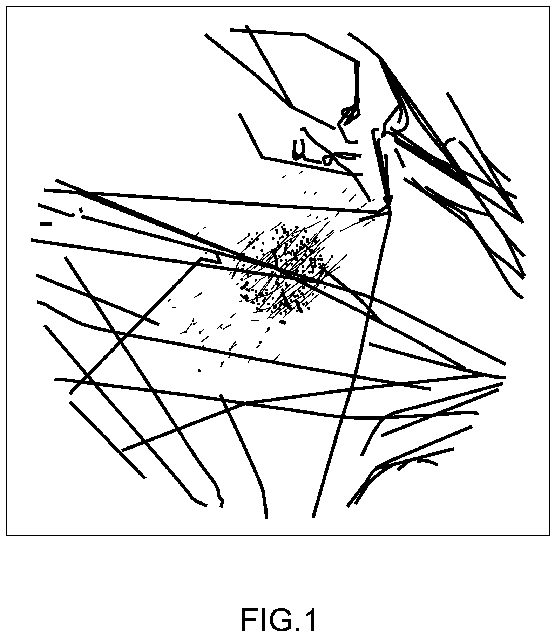

La [Fig. 1] représente schématiquement, en traits plus épais des pistes représentatives d'aéronefs, et en traits plus fins, des anges radar.

Le phénomène d'apparition des anges radar n'est pas permanent car il dépend des conditions atmosphériques. L'ordre de grandeur de la durée du phénomène va de quelques dizaines de minutes à quelques heures. Lorsque qu'il est en cours, la stationnarité du phénomène dépasse la dizaine de minute.

Ces fausses pistes anges s'ajoutent aux autres pistes, sont propagées dans l'ensemble de la chaîne de surveillance et perturbent la mission de surveillance.

Il est connu de faire du traitement du signal et du traitement informatique pour traiter les anges. Les techniques utilisées sont :
- L'élimination en suivant seulement les échos qui bougent ;
- Le filtrage des échos en utilisant leur vitesse Doppler ;
- La corrélation avec des radars de surveillance secondaires ;
- Le taux de fausses alarmes constant :
- Le comptage de pistes présentant des caractéristiques prédéfinies de phénomènes anges et la suppression de ces pistes lorsque leur nombre dépasse un seuil dans un secteur donné.

Ces types de solutions connues présentent respectivement les limitations qui suivent :
- L'élimination en suivant seulement les échos qui bougent implique de déterminer un seuil minimum à partir duquel on considère qu'il y a mouvement. L'émergence massive de cibles lentes (comme les drones lents) ne permet plus d'appliquer des seuils qui éliminent les anges sans également éliminer les drones. La définition du seuil est au mieux manuel, au pire un paramètre d'usine non réglable par un opérateur radar, ce qui compromet l'adaptation en temps utile aux conditions du moment.
- Le filtrage des échos utilisant leur vitesse Doppler requiert également de fixer un seuil minimum qui s'applique sur la vitesse radiale par rapport au radar, c'est à dire la vitesse d'un objet mesurée dans la direction du rayon (ou la ligne de visée) vers ou depuis le radar. L'application de ce seuil élimine également les vraies cibles lentes. De plus, la répartition des anges tout autour du radar avec des trajectoires non radiales au radar compromet le réglage d'un seuil pertinent. La définition du seuil est au mieux manuel, au pire un paramètre usine non réglable par un opérateur radar, ce qui compromet l'adaptation en temps utile aux conditions du moment.
- La corrélation avec des radars de surveillance secondaires n'est pas possible pour distinguer les anges et les cibles non coopératives, qui par définition, ne répondent pas aux radars secondaires.
- La méthode du taux de fausses alarmes constant est certes adaptative, mais elle conduit au durcissement de la confirmation de la détection et affecte donc la détection de cibles à faible surface équivalente radar dont font partie les drones.
- Le comptage de pistes présentant des caractéristiques « anges » prédéfinies et suppression de ces pistes lorsque leur nombre dépasse un seuil dans un secteur donné présente deux inconvénients majeurs : les caractéristiques présumées des anges sont supposées être connues, ce qui est peu adapté pour des phénomènes qui évoluent ; le comptage par secteur au lieu d'un comptage non sectorisé est peu adapté à un phénomène non sectorisé et conduit soit à retarder l'application du traitement de suppression ou à le déclencher de manière intempestive.

Un radar primaire est un radar équipé d'une antenne primaire qui émet un signal et reçoit le signal réfléchi par une cible, et un radar secondaire est un radar équipé d'une antenne secondaire qui reçoit un signal d'interrogation émis par une cible en réponse à la réception d'un signal émis par cette antenne. Un radar primaire/secondaire est un radar équipé d'une antenne primaire et d'une antenne secondaire.

Une piste est représentée par un ensemble de valeurs de paramètres représentatifs de la fusion des détections successives d'une cible par un radar. Lorsqu'une piste est entretenue par des détections primaires, cette piste a une source primaire. Lorsqu'une piste est entretenue par des détections secondaires, cette piste a une source secondaire. Une piste peut avoir une source primaire et une source secondaire.

Un but de l'invention est que ces fausses pistes anges puissent être identifiées automatiquement de manière à, soit les supprimer, soit en permettre le filtrage sur la situation aérienne présentée à un opérateur de surveillance. Ce filtrage ne doit pas se faire au détriment des vraies pistes sur cibles lentes et de faible surface équivalente radar, et doit s'adapter automatiquement au phénomène en cours.

Il est proposé, selon un aspect de l'invention, un système de classification de pistes radar de cibles d'intérêts de type aéronefs, en fausses pistes anges, correspondant à des anges radar, et en autres pistes, correspondant à des cibles d'intérêt :
- un premier étage de classification de source, recevant en entrée une mise à jour de piste, configuré pour déterminer si la piste mise à jour a une source secondaire et délivrer en sortie une classification comme autre piste si la piste mise à jour a une source secondaire, ou transmettre la mise à jour de piste à un deuxième étage ;
- le deuxième étage de détection et de caractérisation d'un phénomène ange, configuré pour détecter un phénomène ange et délivrer en sortie un statut de détection ou non d'un phénomène ange, à un premier module de test du statut, et, en cas de détection d'un phénomène ange, délivrer en sortie une caractérisation du phénomène ange détecté, à un troisième étage ;
- le premier module de test du statut, recevant en entrée la mise à jour de piste du premier étage et le statut de détection ou non de phénomène ange du deuxième étage, configuré pour tester la valeur du statut de détection ou non d'un phénomène ange par le deuxième étage, et, en cas de statut de non détection d'un phénomène ange, délivrer en sortie une classification comme autre piste de la piste mise à jour, et en cas de statut de détection de phénomène piste ange, transmettre la mise à jour de piste au troisième étage ;
- le deuxième étage de détection et de caractérisation d'un phénomène ange comprend :
   - un quatrième module de test de l'atteinte ou non de la fin d'un intervalle de temps répétitif configuré pour, après stockage de la mise à jour de pistes dans une base de données de l'historique des mises à jour de pistes de l'intervalle de temps courant, si la fin de l'intervalle de temps courant est atteinte pour extraire le contenu de la base de données de l'historique des mises à jour de pistes de l'intervalle de temps courant, réinitialiser la base de données de l'historique des mises à jours de pistes de l'intervalle de temps courant, et transmettre des mises à jour de pistes de l'intervalle de temps courant à un module de partitionnement ;
   - le module de partitionnement configuré pour effectuer un partitionnement des mises à jour de pistes de l'intervalle de temps écoulé, par étude de similarité d'attributs de la mise à jour de piste comprenant le cap et la vitesse de la piste, détecter la présence d'un phénomène ange, délivrer en sortie un statut de détection ou non d'un phénomène ange, et, en cas de détection d'un phénomène ange, délivrer en sortie une caractérisation du phénomène ange détecté, au troisième étage ; et
- le troisième étage, configuré pour effectuer une classification de la piste mise à jour comme fausse piste ange ou autre piste, par deux classificateurs pré-entrainés, disposés en série, utilisant chacun un algorithme de type forêt aléatoire.

Dans un mode de réalisation, le premier étage de classification de source comprend :
- un deuxième module de test configuré pour tester si un identifiant de la piste mise à jour correspond à un identifiant de piste ayant une source radar secondaire déjà répertoriée comme piste avec une source radar secondaire, par accès à une base de données d'historiques de pistes ayant une source secondaire, pour délivrer en sortie une classification comme autre piste de la piste mise à jour si l'identifiant correspond à une piste ayant une source radar secondaire dans la base de données d'historiques de pistes ayant une source radar secondaire, et pour transmettre la mise à jour de piste à un troisième module de test sinon ;
- le troisième module de test configuré pour tester si la mise à jour de piste provient d'une source radar secondaire, pour stocker en mémoire la piste mise à jour dans la base de données d'historiques de pistes ayant une source radar secondaire si la piste mise à jour est considérée comme provenant d'une source radar secondaire et délivrer en sortie une classification comme autre piste de la piste mise à jour, et pour transmettre au deuxième étage la mise à jour de piste sinon.

Dans un mode de réalisation, le troisième étage de classification de la mise à jour de piste, pour un intervalle de temps, comme fausse piste ange ou autre piste comprend :
- un premier classificateur pré-entrainé utilisant un algorithme de type forêt aléatoire permettant de délivrer en sortie une classification courante de la piste, lorsque l'intervalle de temps courant n'est pas écoulé ;
- un deuxième classificateur pré-entrainé utilisant un algorithme de type forêt aléatoire ;
- un module de calcul de vraisemblance de classification du deuxième classificateur ; et
- une base de règles de détermination de la classification finale à partir du vecteur de vraisemblance, configurée pour être appliquée en sortie du module de calcul de vraisemblance et délivrer en sortie une classification de la piste en fausse piste ange ou autre piste, en fin de l'intervalle de temps courant.

Selon un mode de réalisation, le système comprend une base de données de mises à jour de pistes configurée pour entraîner par apprentissage les premier et deuxième classificateurs du troisième étage.

Il est également proposé, selon un autre aspect de l'invention, un centre de surveillance aérienne, muni d'un système de détection de fausses pistes anges, tel que précédemment décrit.

L'invention sera mieux comprise à l'étude de quelques modes de réalisation décrits à titre d'exemples nullement limitatifs et illustrés par les dessins annexés sur lesquels :
[Fig.1] illustre schématiquement un phénomène ange, selon l'état de l'art ; et
[Fig.2] illustre schématiquement un système de détection de pistes anges comprenant un dispositif de détection de phénomène ange et un dispositif de classification de piste radar en fausse piste ange ou en autre piste, selon un aspect de l'invention ;
[Fig.3] illustre schématiquement un premier étage d'un système de la [Fig.2], selon un aspect de l'invention ;
[Fig.4] illustre schématiquement un deuxième étage d'un système de la [Fig.2], selon un aspect de l'invention ;
[Fig.5] illustre schématiquement un troisième étage d'un système de la [Fig.2], selon un aspect de l'invention ; et
[Fig.6] illustre schématiquement une chronologie de fonctionnement du système de la [Fig.1], selon un aspect de l'invention.

Sur l'ensemble des figures, les éléments ayant des références identiques sont similaires.

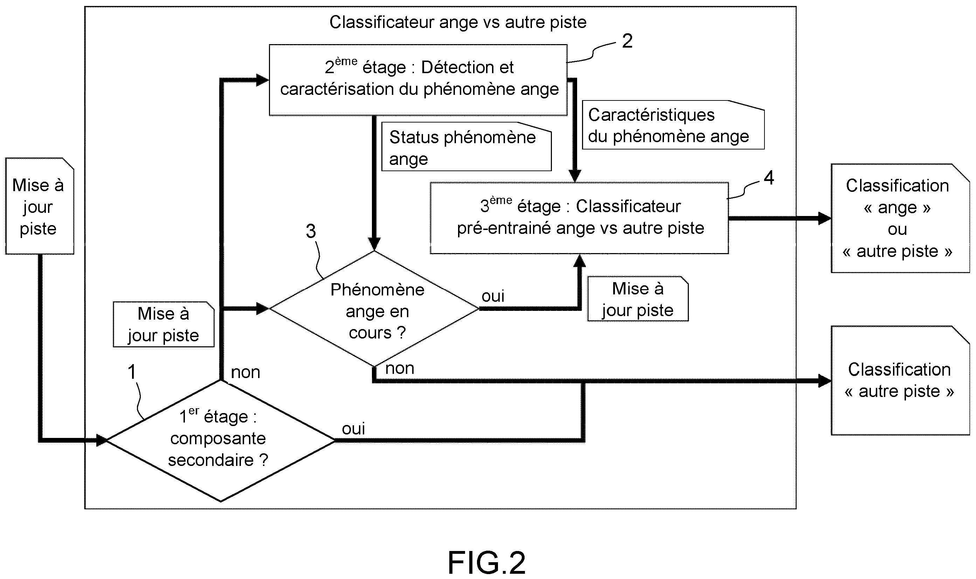

La [Fig.2] illustre schématiquement un système de détection de pistes anges comprenant un dispositif de détection de phénomène ange et un dispositif de classification de piste radar en fausse piste ange ou en autre piste, selon un aspect de l'invention.

Une piste est un historique de mises à jour successives de l'état, selon un ensemble de caractéristiques, du suivi d'une cible supposée. Une piste est désignée par un identifiant unique, appelé identifiant piste.

Le système de détection de fausse piste ange prend en entrée une mise à jour piste et fournit en sortie une classification "fausse piste ange" ou "autre piste".

Le système de classification de pistes radars, en fausses pistes anges, correspondant à des anges radar, et autres pistes, correspondant à des cibles d'intérêt, comprend trois étages :
- un premier étage 1 de classification de source, recevant en entrée une mise à jour de piste, configuré pour déterminer si une piste a une source radar secondaire et délivrer en sortie une classification comme autre piste si une piste mise à jour a une source radar secondaire, ou transmettre la mise à jour de piste à un deuxième étage 2 ;
- le deuxième étage 2 de détection et de caractérisation d'un phénomène ange, configuré pour détecter un phénomène ange et délivrer en sortie un statut de détection ou non d'un phénomène ange, à un premier module de test 3 du statut, et, en cas de détection d'un phénomène ange, délivrer en sortie une caractérisation du phénomène ange détecté, à un troisième étage 4 ;
- le premier module de test 3 du statut, recevant en entrée la mise à jour de piste du premier étage 1 et le statut de détection ou non d'un phénomène ange du deuxième étage 2, configuré pour tester la valeur du statut de détection ou non d'un phénomène ange par le deuxième étage 2, et, en cas de statut de non détection d'un phénomène ange, délivrer en sortie une classification comme autre piste de la piste mise à jour, et en cas de statut de détection de phénomène ange, transmettre la mise à jour de piste au troisième étage 4 ; et
- le troisième étage 4, configuré pour effectuer une classification de la mise à jour de piste comme fausse piste ange ou autre piste, par deux classificateurs pré-entrainés, disposés en série, utilisant chacun un algorithme de type forêt aléatoire.

La caractérisation du phénomène ange détecté comprend les valeurs de paramètres comprenant la direction et la vitesse du phénomène ange détecté.

La présente invention a pour avantages suivants :
- la détection automatique du phénomène anges ;
- l'extraction automatique des caractéristiques du phénomène ;
- l'activation automatique du classificateur pré-entraîné fausse piste anges vs autre piste ;
- la prise en compte automatique par l'étage de classification des paramètres du phénomène ;
- la réévaluation périodique de la classification fausse piste « anges » vs autre piste ;
- un filtrage significatif des fausses pistes anges ; et
- un risque faible de supprimer les pistes sur drones.

Deux phases sont à distinguer, classiques à un algorithme de "Machine Learning" en langue anglaise, ou Apprentissage Automatique, dans le fonctionnement du système :
- une phase d'apprentissage qui est à réaliser au préalable de toute exploitation mais ne nécessite d'être exécutée qu'une seule fois en fournissant un ensemble de mises à jour pistes labélisées (i.e. dont la classification réelle est connue) en entrée, les différents classificateurs du système basés sur du Machine Learning supervisé s'auto paramètrent ; et
- une phase d'inférence qui prend en entrée des mises à jour pistes, et retourne une classification indiquant s'il s'agit vraisemblablement d'une fausse piste ange ou d'une autre piste.

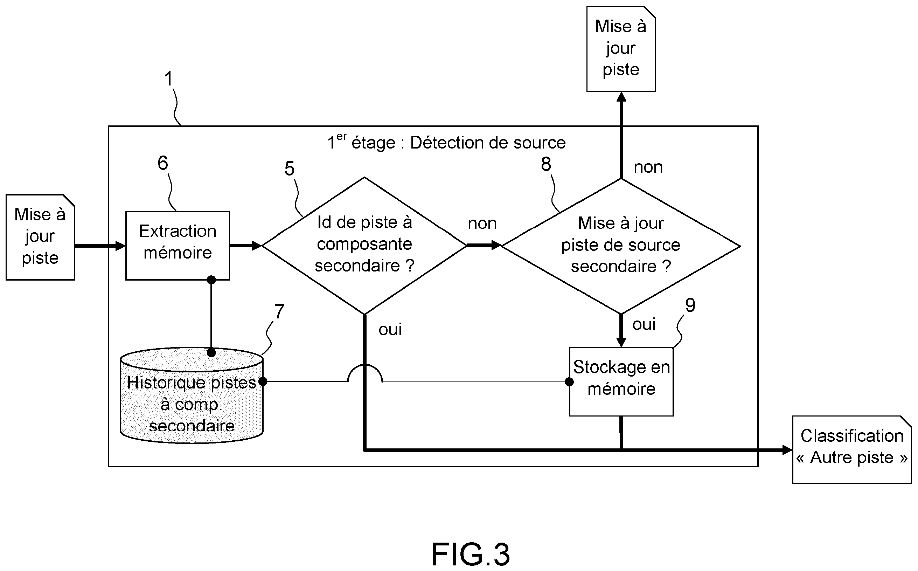

La [Fig3] illustre schématiquement le premier étage 1 de classification de source. Le premier étage 1 comprend :
- un deuxième module de test 5 configuré pour tester si un identifiant de la piste mise à jour correspond à une piste ayant une source radar secondaire déjà identifié, par accès 6 à une base de données 7 de pistes ayant une source radar secondaire, pour délivrer en sortie une classification comme autre piste de la piste mise à jour si l'identifiant correspond à un identifiant de piste ayant une source radar secondaire dans la base de données 7 d'historiques de pistes ayant une source radar secondaire, et pour transmettre la mise à jour de piste à un troisième module de test 8 sinon ;
- le troisième module de test 8 configuré pour tester si la mise à jour de piste comporte une source radar secondaire , pour stocker 9 en mémoire la piste mise à jour dans la base de données 6 de pistes ayant une source radar secondaire si la mise à jour de la piste est considérée comme ayant une source radar secondaire et délivrer en sortie une caractérisation de la fausse piste ange détectée, et pour transmettre au deuxième étage 2 la mise à jour de piste sinon.

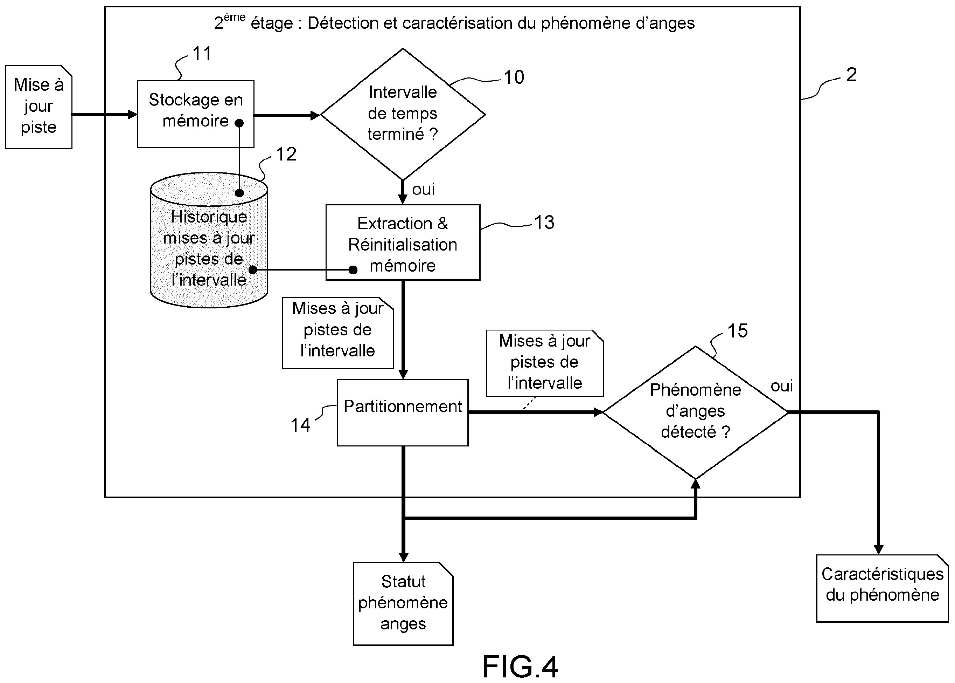

La [Fig4] illustre schématiquement le deuxième étage 2 de détection et de caractérisation d'un phénomène ange. Le deuxième étage 2 comprend :
- un quatrième module de test 10 de l'atteinte ou non de la fin d'un intervalle de temps ΔT répétitif configuré pour, après stockage 11 de la mise à jour de pistes dans une base de données 12 de l'historique des mises à jour de pistes de l'intervalle de temps courant ΔT, si la fin de l'intervalle de temps ΔT courant est atteinte pour extraire 13 le contenu de la base de données de l'historique des mises à jour de pistes de l'intervalle de temps courant, réinitialiser 13 la base de données 12 de l'historique des mises à jours de pistes de l'intervalle de temps ΔT courant, et transmettre des mises à jour de pistes de l'intervalle de temps ΔT courant à un module de partitionnement 14 ;
- le module de partitionnement 14 configuré pour effectuer un partitionnement des mises à jour de pistes de l'intervalle de temps ΔT écoulé, par étude de similarité d'attributs de la mise à jour de piste comprenant le cap et la vitesse de la piste, détecter 15 la présence d'un phénomène ange, délivrer en sortie un statut de détection ou non d'un phénomène ange, et, en cas de détection 15 d'un phénomène ange, délivrer en sortie une caractérisation du phénomène ange détecté, au troisième étage 4.

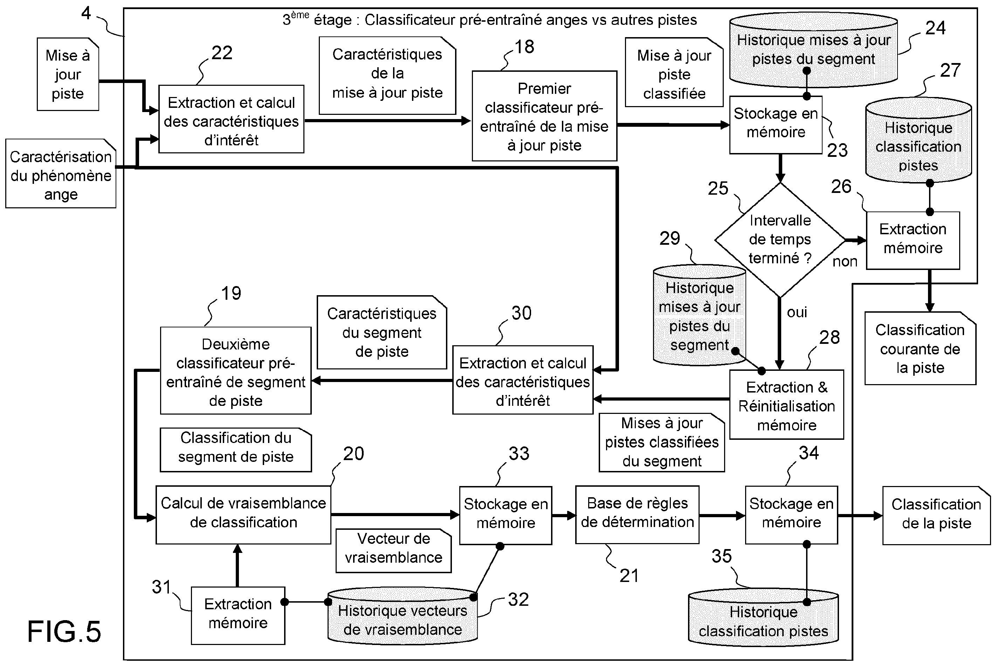

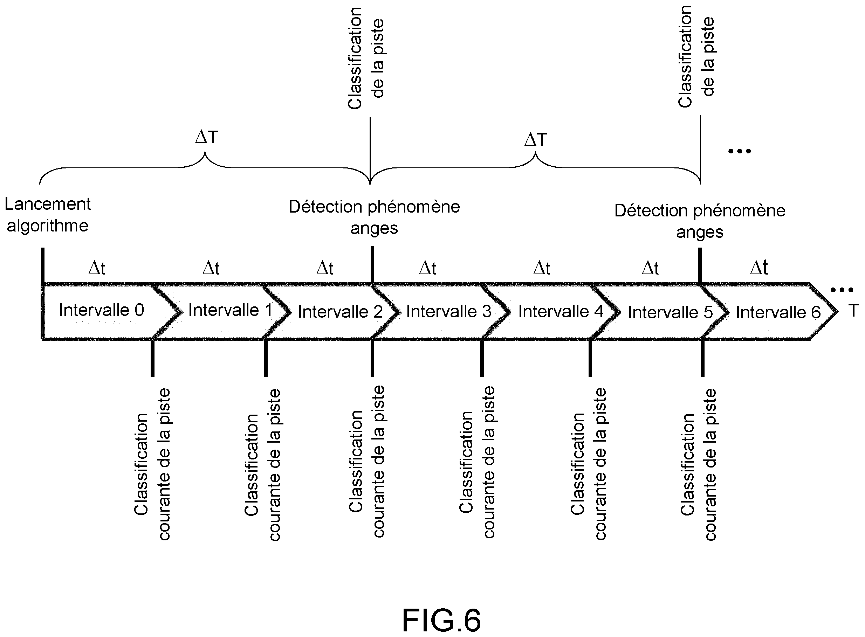

La [Fig5] illustre schématiquement le troisième étage 4 de classification de la mise à jour de piste, pour un intervalle de temps Δt, comme fausse piste ange ou autre piste. Le temps est découpé en intervalles de temps Δt successifs, comme illustré sur la [Fig.6]. Le troisième étage 4 comprend :
- un premier classificateur 18 pré-entrainé utilisant un algorithme de type forêt aléatoire permettant de délivrer en sortie une classification courante de la piste, lorsque l'intervalle de temps courant Δt n'est pas écoulé ;
- un deuxième classificateur 19 pré-entrainé utilisant un algorithme de type forêt aléatoire :
- un module de calcul de vraisemblance de classification 20 du deuxième classificateur 19; et
- une base de règles 21 de détermination de classification finale à partir du vecteur de vraisemblance, configurée pour être appliquée en sortie du module 20 de calcul de vraisemblance et délivrer en sortie une classification de la piste en fausse piste ange ou autre piste, en fin de l'intervalle de temps courant ΔT.

A partir de la mise à jour de piste et de la caractérisation du phénomène ange détecté, un module 22 d'extraction et de calcul de caractéristiques d'intérêt effectue une extraction de données de la mise à jour de piste et de la caractérisation du phénomène ange détecté pour fournir au premier classificateur 18 des caractéristiques de la mise à jour de piste, i.e. des valeurs de paramètres représentatifs de la mise à jour de piste comprenant ses paramètres cinématiques et sa classification radar.

Le premier classificateur délivre en sortie une mise à jour de piste classifiée qui est stockée en mémoire par un module 23 de stockage en mémoire dans une base de données 24 d'historique de mises à jour de pistes du segment (i.e. l'ensemble des mises à jour d'une piste ayant eu lieu pendant l'intervalle de temps courant ΔT)

Un cinquième module de test 25 teste si l'intervalle de temps courant Δt est écoulé, et si ce n'est pas le cas, comme illustré sur la [Fig.6], sans être à la fin de l'intervalle de temps courant Δt, un module d'extraction mémoire 6 extrait d'une base de données 27 d'historiques de classification de pistes, une classification courante de la piste délivrée en sortie.

Si le cinquième module de test 25 détermine que l'intervalle de temps courant Δt est écoulé, un module 28 d'extraction des données et de réinitialisation mémoire, délivre en sortie les données d'une base de données 29 d'historiques de mises à jour de pistes du segment à destination d'un module 30 d'extraction et de calcul de caractéristiques d'intérêts, et réinitialise cette dernière 29.

Le module 30 d'extraction et de calcul de caractéristiques d'intérêts reçoit également en entrée la caractérisation d'une fausse piste ange détectée à par le deuxième étage 2, et délivrer en sortie des caractéristiques du segment de piste, i.e. des valeurs de paramètres représentatifs du segment de piste, comprenant les statistiques des caractéristiques cinématiques et de la classification radar des mises à jour pistes du segment, à destination du deuxième classificateur 19.

Le deuxième classificateur 19 délivre en sortie une classification du segment de piste comme fausse piste ange ou autre piste, à destination du module 20 de calcul de vraisemblance de classification qui reçoit également en entrée une extraction mémoire effectuée par un module 31 d'extraction mémoire qui extrait les données d'une base de données 32 d'historique de vecteurs de vraisemblance.

Le module 20 de calcul de vraisemblance de classification calcule par exemple par calcul matriciel mettant en jeu la classification du deuxième classificateur 19, l'extraction mémoire du dernier vecteur de vraisemblance de la piste délivrée par le module 31 et une matrice de paramètres fixés alors un vecteur de vraisemblance, qu'il délivre en sortie à destination d'un module 33 de stockage en mémoire dudit vecteur de vraisemblance dans la base de données 32 d'historique de vecteurs de vraisemblance.

A partir du vecteur de vraisemblance, la base 21 de règles de détermination 21 permet d'évaluer les valeurs du vecteur de vraisemblance vis-à-vis de seuils fixés et de délivrer en sortie une classification de la piste parmi une fausse piste anges radar ou une autre piste, un module 34 de stockage en mémoire stocke dans une base de données 35 d'historique. De classification de pistes

Le système selon l'invention, comprend également une base de données de mises à jour de pistes configurée pour entraîner par apprentissage les premier et deuxième classificateurs du troisième étage 4.

Selon un aspect de l'invention, un centre de surveillance aérienne peut être muni d'un système de classification de pistes radar en fausses pistes anges, correspondant à des anges radar, et en autres pistes, tel que décrit précédemment.

La spécificité de la présente invention, par rapport à un algorithme de Machine Learning classique, repose sur plusieurs aspects qui suivent.

Tout d'abord, le fonctionnement est adaptatif ; en effet, le premier étage 1 détermine si la piste comporte des mises à jour issues de source secondaire et sinon, cherche à détecter un phénomène d'anges en extrayant ses caractéristiques cinématiques. Cette détection utilise un algorithme de partitionnement ou "clustering" en langue anglaise sur des attributs déterminés des mises à jour de piste. Cela nécessite de conserver en mémoire les mises à jour de piste sur un intervalle de temps ΔT. La présente invention est innovante et mieux adaptée qu'une étude par secteur radar car le phénomène ange est plus naturellement formalisable dans un repère cartésien ou géographique que dans un repère polaire traditionnellement utilisé par les radaristes. En fonction de la réponse à la détection de source secondaire et à la détection de phénomène d'anges, les mises à jour de pistes passent ou non dans le troisième étage 4 de classification. Cela réduit le risque d'erreur de classification de vraies pistes en ange.

En outre, la structure du troisième étage 4 est inédite, comprenant deux classificateurs 18, 19 disposés en série, utilisant chacun un algorithme des forêts aléatoires. Le premier classificateur 18 traitant les mises à jour de pistes individuellement selon des attributs déterminés, et le deuxième classificateur 19 traitant les pistes dans leur globalité, se basant sur les caractéristiques statistiques calculées, auxquelles sont ajoutées les prédictions du premier classificateur 18. L'invention permet à la fois de capter des variations locales et de prendre en compte la globalité connue de la piste sur un intervalle de temps. De plus les forêts aléatoires sont bien moins coûteuses en ressources et en temps d'exécution que des réseaux de neurones et se basent sur une structure d'arbre de décision, similaire à un processus décisionnel humain, apportant donc un gain d'explicabilité (capacité de mettre en relation et de rendre compréhensible les éléments pris en compte par le système d'IA pour la production d'un résultat). La classification est donnée pour un segment de piste et nécessite donc ici de conserver en mémoire les mises à jour pistes sur un intervalle de temps.

De plus, l'invention présente un autre aspect inédit, la classification donnée à chaque piste et la détection de phénomène d'anges est réversible car la piste n'est pas systématiquement supprimée quand elle est classifiée « fausse piste ange » comme dans certains traitements existants mais marquée comme telle. Ceci permet une réévaluation périodique, selon des intervalles de temps fixés. Cela est d'ailleurs permis par la rapidité d'exécution des classificateurs vus précédemment). La détection de phénomène anges est réévaluée sur des intervalles de temps larges, permettant de suivre l'évolution locale de la situation atmosphérique en temps réel, d'adapter/d'inhiber la classification anges si le phénomène météorologique évolue/s'interrompt. En pratique, un intervalle de temps unitaire Δt est déterminé, utilisé pour l'intervalle court, l'intervalle long ΔT correspondant à un multiple de cet intervalle unitaire comme sur l'exemple de la [Fig.6].

Enfin, autre aspect inédit de la solution est de construire un vecteur de vraisemblance prenant en compte l'historique des prédictions passées. Ce vecteur est propre à chaque piste et indique pour chaque label possible la probabilité associée, à un instant donné. Il est donc mis à jour à chaque intervalle, en prenant en compte les valeurs du vecteur précédent, les nouvelles prédictions des classificateurs, ainsi qu'une matrice de transition d'un état à un autre (adaptée à chaque cas de figure), en pondérant l'apport des nouvelles valeurs.

Parmi les principaux avantages de cette solution, on trouve :
- la détection automatique du phénomène anges, ce qui permet une adaptation automatique des traitements à son caractère intermittent ;
- l'extraction automatique des caractéristiques du phénomène, caractéristiques essentielles pour le traitement des anges ;
- l'activation automatique de l'étage de classification fausse piste ange vs autre piste. La classification fausse piste ange / autre piste n'est activée que lorsqu'elle est nécessaire ;
- la prise en compte automatique par l'étage de classification des paramètres du phénomène ;
- la réévaluation périodique de la classification fausse piste anges vs autre piste, avec une prise en compte de l'historique de la piste ;
- un risque faible de supprimer les pistes sur pistes lentes à faible surface équivalente radar. Pas de risque de classification anges erronée lorsque la détection du phénomène anges n'est pas en cours ; un risque qui reste faible lorsque la classification anges est activée ;
- les caractéristiques du phénomène anges sont exprimées dans un référentiel universel, adapté au phénomène physique et compréhensibles pour un opérateur ;
- ne requiert pas d'intervention humaine pour déterminer les traitements adaptés au phénomène intermittent ;
- l'étage de classification repose sur un apprentissage acquis et ne requiert pas de réapprentissage.

## Revendications

1. Système de classification de pistes radar, en fausses pistes anges, correspondant à des anges radar, et en autres pistes, correspondant à des cibles d'intérêt, comprenant trois étages :
- un premier étage (1) de classification de source, recevant en entrée une mise à jour de piste, configuré pour déterminer si une piste a une source radar secondaire et délivrer en sortie une classification comme autre piste si une piste mise à jour a une source radar secondaire, ou transmettre la mise à jour de piste à un deuxième étage (2) ;
- le deuxième étage (2) de détection et de caractérisation d'un phénomène ange, configuré pour détecter un phénomène ange et délivrer en sortie un statut de détection ou non d'un phénomène ange, à un premier module de test (3) du statut, et, en cas de détection d'un phénomène ange, délivrer en sortie une caractérisation du phénomène ange détecté, à un troisième étage (4) ;
- le premier module de test (3) du statut, recevant en entrée la mise à jour de piste du premier étage et le statut de détection ou non d'un phénomène ange du deuxième étage (2), configuré pour tester la valeur du statut de détection ou non d'un phénomène ange par le deuxième étage (2), et, en cas de statut de non détection d'un phénomène ange, délivrer en sortie une classification comme autre piste de la piste mise à jour, et en cas de statut de détection de phénomène ange, transmettre la mise à jour de piste au troisième étage (4) ;
- le deuxième étage (2) de détection et de caractérisation d'un phénomène ange comprend :
- un quatrième module de test (10) de l'atteinte ou non de la fin d'un intervalle de temps répétitif configuré pour, après stockage (11) de la mise à jour de pistes dans une base de données (12) de l'historique des mises à jour de pistes de l'intervalle de temps courant, si la fin de l'intervalle de temps courant est atteinte pour extraire (13) le contenu de la base de données de l'historique des mises à jour de pistes de l'intervalle de temps courant, réinitialiser (13) la base de données (12) de l'historique des mises à jours de pistes de l'intervalle de temps courant, et transmettre des mises à jour de pistes de l'intervalle de temps courant à un module de partitionnement (14) ;
- le module de partitionnement (14) configuré pour effectuer un partitionnement des mises à jour de pistes de l'intervalle de temps écoulé, par étude de similarité d'attributs de la mise à jour de piste comprenant le cap et la vitesse de la piste, détecter (15) la présence d'un phénomène ange, délivrer en sortie un statut de détection ou non d'un phénomène ange, et, en cas de détection (15) d'un phénomène ange, délivrer en sortie une caractérisation du phénomène ange détecté, au troisième étage (4) ; et
- le troisième étage (4), configuré pour effectuer une classification de la piste mise à jour comme fausse piste ange ou autre piste, par deux classificateurs pré-entrainés, disposés en série, utilisant chacun un algorithme de type forêt aléatoire.

2. Système selon la revendication 1, dans lequel le premier étage de classification de source comprend :
- un deuxième module de test (5) configuré pour tester si un identifiant de la piste mise à jour correspond à un identifiant de piste ayant une source radar secondaire déjà répertoriée comme piste avec une source radar secondaire, par accès à une base de données (7) d'historiques de pistes de radar secondaires, pour délivrer en sortie une classification comme autre piste de la piste mise à jour si l'identifiant correspond à un identifiant de piste ayant une source radar secondaire dans la base de données (7) d'historiques de pistes ayant une source radar secondaire, et pour transmettre la mise à jour de piste à un troisième module de test (8) sinon ;
- le troisième module de test (8) configuré pour tester si la mise à jour de piste provient d'une source radar secondaire , pour stocker (9) en mémoire la piste mise à jour dans la base de données (6) d'historiques de pistes ayant une source radar secondaire si la piste mise à jour est considérée comme une piste provenant d'une source radar secondaire et délivrer en sortie une classification comme autre piste de la piste mise à jour, et pour transmettre au deuxième étage (2) la mise à jour de piste sinon.

3. Système selon l'une des revendications précédentes, dans lequel le troisième étage (4) de classification de la mise à jour de piste, pour un intervalle de temps (ΔT), comme fausse piste ange ou autre piste comprend :
- un premier classificateur (18) pré-entrainé utilisant un algorithme de type forêt aléatoire permettant de délivrer en sortie une classification courante de la piste, lorsque l'intervalle de temps courant (ΔT ) n'est pas écoulé ;
- un deuxième classificateur (19) pré-entrainé utilisant un algorithme de type forêt aléatoire ;
- un module de calcul de vraisemblance de classification (20) du deuxième classificateur (19) ; et
- une base de règles (21) de détermination de la classification finale à partir du vecteur de vraisemblance, configurée pour être appliquée en sortie du module (20) de calcul de vraisemblance et délivrer en sortie une classification de la piste en fausse piste ange ou autre piste, en fin de l'intervalle de temps courant (ΔT).

4. Système selon l'une des revendications précédentes, comprenant une base données (24) de mises à jour de pistes configurée pour entraîner par apprentissage les premier et deuxième classificateurs du troisième étage (4).

5. Centre de surveillance aérienne, muni d'un système de classification de pistes radar en fausses pistes anges, correspondant à des anges radar, et en autres pistes, selon l'une des revendications précédentes.

## Patentansprüche

1. System zur Klassifizierung von Radarspuren in falsche Engelsspuren, die Radarengeln entsprechen, und in andere Spuren, die interessierenden Zielen entsprechen, umfassend drei Stufen:
- eine erste Stufe (1) der Quellenklassifizierung, die als Eingabe eine Spurenaktualisierung empfängt und konfiguriert ist, um zu bestimmen, ob eine Spur eine sekundäre Radarquelle aufweist und als Ausgabe eine Klassifizierung als andere Spur abzugeben, wenn eine aktualisierte Spur eine sekundäre Radarquelle aufweist, oder die Spurenaktualisierung an eine zweite Stufe (2) zu übertragen;
- die zweite Stufe (2) der Erkennung und Charakterisierung eines Engelphänomens, die konfiguriert ist, um ein Engelphänomen zu erkennen und als Ausgabe einen Erkennungs- oder Nichterkennungsstatus eines Engelphänomens an ein erstes Testmodul (3) des Status abzugeben, und im Falle einer Erkennung eines Engelphänomens als Ausgabe eine Charakterisierung des erkannten Engelphänomens an eine dritte Stufe (4) abzugeben;
- das erste Testmodul (3) des Status, das als Eingabe die Spurenaktualisierung von der ersten Stufe und den Erkennungs- oder Nichterkennungsstatus eines Engelphänomens von der zweiten Stufe (2) empfängt, konfiguriert ist, um den Wert des Erkennungs- oder Nichterkennungsstatus eines Engelphänomens durch die zweite Stufe (2) zu testen, und im Falle eines Nichterkennungsstatus eines Engelphänomens als Ausgabe eine Klassifizierung der aktualisierten Spur als andere Spur abzugeben und im Falle eines Erkennungsstatus eines Engelphänomens die Spurenaktualisierung an die dritte Stufe (4) zu übertragen;
- wobei die zweite Stufe (2) der Erkennung und Charakterisierung eines Engelphänomens umfasst:
- ein viertes Testmodul (10) des Erreichens oder Nichterreichens des Endes eines wiederholten Zeitintervalls, das konfiguriert ist, um nach Speichern (11) der Spurenaktualisierung in einer Datenbank (12) des Spurenaktualisierungsverlaufs des aktuellen Zeitintervalls, wenn das Ende des aktuellen Zeitintervalls erreicht ist, den Inhalt (13) der Datenbank des Spurenaktualisierungsverlaufs des aktuellen Zeitintervalls zu extrahieren, die Datenbank (12) des Spurenaktualisierungsverlaufs des aktuellen Zeitintervalls zurückzusetzen (13) und Spurenaktualisierungen des aktuellen Zeitintervalls an ein Teilungsmodul (14) zu übertragen;
- das Teilungsmodul (14) konfiguriert ist, um eine Teilung der Spurenaktualisierungen des verstrichenen Zeitintervalls durch Studie von Ähnlichkeitsmerkmalen der Spurenaktualisierung, die die Richtung und Geschwindigkeit der Spur umfasst, durchzuführen, das Vorhandensein eines Engelphänomens zu erkennen (15), als Ausgabe einen Erkennungs- oder Nichterkennungsstatus eines Engelphänomens auszugeben und im Falle einer Erkennung (15) eines Engelphänomens als Ausgabe eine Charakterisierung des erkannten Engelphänomens an die dritte Stufe (4) abzugeben; und
- die dritte Stufe (4), die konfiguriert ist, um durch zwei vorab trainierte Klassifikatoren, die in Reihe angeordnet sind und jeweils einen Algorithmus vom Typ Random Forest verwenden, eine Klassifizierung der aktualisierten Spur als falsche Engelsspur oder andere Spur durchzuführen.

2. System nach Anspruch 1, wobei die erste Stufe der Quelleklassifizierung umfasst:
- ein zweites Testmodul (5), das konfiguriert ist, um durch Zugang zu einer Datenbank (7) von Verläufen von sekundären Radarspuren zu testen, ob eine Kennung der aktualisierten Spur einer Spurenkennung mit einer sekundären Radarquelle entspricht, die bereits als Spur mit einer sekundären Radarquelle erfasst ist, um als Ausgabe eine Klassifizierung der aktualisierte Spur als andere Spur abzugeben, wenn die Kennung einer Spurenkennnung mit einer sekundären Radarquelle in der Datenbank (7) von Verläufen von Spuren mit einer sekundären Radarquelle entspricht, und andernfalls die Spurenaktualisierung an ein drittes Testmodul (8) zu übertragen;
- das dritte Testmodul (8), das konfiguriert ist, um zu testen, ob die Spurenaktualisierung von einer sekundären Radarquelle stammt, um die aktualisierte Spur in der Datenbank (6) von Verläufen von Spuren mit einer sekundären Radarquelle im Speicher zu speichern (9), wenn die aktualisierte Spur als eine Spur betrachtet wird, die von einer sekundären Radarquelle stammt, und als Ausgabe eine Klassifizierung der aktualisierten Spur als andere Spur abzugeben, und andernfalls die Spurenaktualisierung an die zweite Stufe (2) zu übertragen.

3. System nach einem der vorstehenden Ansprüche, wobei die dritte Stufe (4) der Klassifizierung der Spurenaktualisierung für ein Zeitintervall (ΔT) als falsche Engelsspur oder andere Spur umfasst:
- einen vorab trainierten ersten Klassifikator (18), der einen Algorithmus vom Typ Random Forest verwendet, der ermöglicht, als Ausgabe eine aktuelle Klassifizierung der Spur abzugeben, wenn das aktuelle Zeitintervall (ΔT) nicht verstrichen ist;
- einen vorab trainierten zweiten Klassifikator (19), der einen Algorithmus vom Typ Random Forest verwendet;
- ein Modul zur Berechnung der Plausibilität der Klassifizierung (20) des zweiten Klassifikators (19); und
- eine Regelbasis (21) zur Bestimmung der endgültigen Klassifizierung ausgehend von dem Plausibilitätsvektor, die konfiguriert ist, um als Ausgabe am Modul zur Berechnung der Plausibilität der Klassifizierung (20) angewendet zu werden und als Ausgabe am Ende des aktuellen Zeitintervalls (ΔT) eine Klassifizierung der Spur in falsche Engelsspur oder andere Spur abzugeben.

4. System nach einem der vorstehenden Ansprüche, umfassend eine Datenbank (24) von Spurenaktualisierungen, die konfiguriert ist, um den ersten und den zweiten Klassifikator der dritten Stufe (4) durch einen Lernprozess zu trainieren.

5. Luftüberwachungszentrum, das mit einem System der Klassifizierung von Radarspuren in falsche Engelsspuren, die Radarengeln entsprechen, und in andere Spuren nach einem der vorstehenden Ansprüche ausgestattet ist.

## Claims

1. System for classifying radar tracks, as false angel tracks, corresponding to radar angels, and as other tracks, corresponding to targets of interest, including three stages:
- a first stage (1) of source classification, receiving as input a track update, configured to determine whether a track has a secondary radar source and issue as output a classification as other track if an updated track has a secondary radar source, or transmit the track update to a second stage (2);
- the second stage (2) for detecting and characterizing an angel phenomenon, configured to detect an angel phenomenon and deliver as output a detection status or not of an angel phenomenon, to a first test module (3) of the status, and, in case of detection of an angel phenomenon, issue as output a characterization of the angel phenomenon detected, to a third stage (4);
- the first test module (3) of the status, receiving as input the track update from the first stage and the detection status or not of an angel phenomenon from the second stage (2), configured to test the value of the detection status or not of an angel phenomenon by the second stage (2), and, in case of a status of non-detection of an angel phenomenon, issue as output a classification as other track of the updated track, and in the case of a detection status of angel phenomenon, transmit the track update to the third stage (4);
- the second stage (2) for detecting and characterizing an angel phenomenon comprises:
- a fourth module (10) for testing the reaching or not of the end of a repetitive time interval configured to, after storage (11) of the update of tracks in a database (12) of the history of the updates of tracks of the current time interval, if the end of the current time interval is reached to extract (13) the content from the database of the history of the updates of tracks of the current time interval, reinitialize (13) the database (12) of the history of the updates of tracks of the current time interval, and transmit updates of tracks of the current time interval to a partitioning module (14);
- the partitioning module (14) configured to carry out a partitioning of the updates of the elapsed time interval, by studying the similarity of attributes of the track update comprising the direction and the speed of the track, detect (15) the presence of an angel phenomenon, issue as output a detection status or not of an angel phenomenon, and, in case of detection (15) of an angel phenomenon, issue as output a characterization of the angel phenomenon detected, to the third stage (4); and
- the third stage (4), configured to carry out a classification of the updated track as false angel track or other track, by two pre-trained classifiers, arranged in series, each using an algorithm of the random forest type.

2. The system according to claim 1, wherein the first source classification stage comprises:
- a second test module test (5) configured to test whether an identifier of the updated track corresponds to a track identifier having a second radar source already listed as a track with a secondary radar source, by access to a database (7) of secondary radar track histories, to issue as output a classification as other track of the updated track if the identifier corresponds to a track identifier having a secondary radar source in the database (7) of track histories having a secondary radar source, and to transmit the track update to a third test module (8) otherwise;
- the third test module (8) configured to test whether the track update comes from a secondary radar source, to store (9) in memory the updated track in the database (6) of track histories having a secondary radar source if the updated track is considered to be a track coming from a secondary radar source and issue as output a classification as other track of the updated track, and to transmit the updated track to the second stage (2) otherwise.

3. System according to one of the preceding claims, wherein the third stage (4) for classifying the track update, for a time interval (ΔT), as false angel track or other track comprises:
- a first pre-trained classifier (18) using an algorithm of the random forest type making it possible to issue as output a current classification of the track, when the current time interval (ΔT ) has not elapsed;
- a second pre-trained classifier (19) using an algorithm of the random forest type;
- a module for calculating the classification likelihood (20) of the second classifier (19); and
- a rule base (21) for determining the final classification using the likelihood vector, configured to be applied as output of the module (20) for calculating the likelihood and issue as output a classification of the track as false angel track or other track, at the end of the current time interval (ΔT).

4. System according to one of the preceding claims, comprising a database (24) of updates of tracks configured to train by learning the first and second classifiers of the third stage (4).

5. Aerial surveillance center, provided with a system for classifying radar tracks as false angel tracks, corresponding to radar angels, and as other tracks, according to one of the preceding claims.
